# EUROPEAN PATENT APPLICATION

(11) **EP 3 124 218 A1**
(43) Date of publication of application: **01.02.2017**
(21) Application number: 15382393.5
(22) Date of filing: 29.07.2015
(51) Int. Cl.: B29C 70/30, B29C 70/54

(54) **MONOLITHIC PRIMARY STRUCTURAL PART FOR AIRCRAFT AND PROCESSES FOR MANUFACTURING IT**

(71) Applicant: Airbus Operations, S.L., 28902 Madrid (ES)
(72) Inventor: GARCÍA NIETO, Carlos, 28906 Getafe (ES); HONORATO RUIZ, Francisco Javier, 28906 Getafe (ES)
(74) Representative: Elzaburu S.L.P.

(57) **Abstract**

Monolithic primary structural part for aircraft, made of carbon fiber composite material and glass fiber composite material, covered completely by at least one glass fiber ply on its external face over multiple carbon fiber plies. The invention also discloses processes to manufacture the monolithic primary structural part for aircraft, which comprise calculating the number of glass fiber plies using the Damage Tolerance criteria for sizing structural parts, in which a number of glass fiber plies replaces a number of carbon fiber plies. These processes can be applied to thin parts or thick parts, with different detectability-energy curves.

## Description

### Field of the invention

The present invention relates to a monolithic primary structural part for aircraft, i.e., those external parts of the aircraft that are likely to be damaged by external impacts, and to processes for manufacturing such part.

### Background of the invention

At present and especially in the aeronautical industry, materials comprising organic matrix and continuous fibers are used on a massive scale, such as, in particular, Carbon Fiber Reinforced Polymers or CFRP, and in a wide range of diverse structural elements.

For example, all of the elements comprising the load transfer boxes of the aircraft lifting surfaces (ribs, stringers, spars and skins), can be manufactured using CFRP.

Including glass fiber plies in the external areas of the structural parts provides a number of advantages (for instance, it avoids delaminations at back-movement of a riveting tool), so some specific areas of these structural parts are covered with glass fiber plies.

Some composite structures have the form of a sandwich structure, with a core element and outer layers comprising carbon fiber and glass fiber layers, as the one disclosed in US 2010/0055384 A1.

However, one of the disadvantages of using glass fiber is its high weight compared with that of carbon fiber, as weight is a very important factor to be taken into account in aircraft construction.

Damage Tolerance criteria is widely considered in the process for sizing the structural parts in aircraft. "Energy level" and "detectability" constitute two key variables for establishing when a structural part must sustain Ultimate Load (UL) or K*Limit Load (LL).

Monolithic primary structural parts made of carbon fiber that are able to offer a proper damage tolerance must have a relatively large thickness. Besides that, detectability in carbon fiber is usually more difficult than desired.

### Summary of the invention

Therefore, the object of the invention is to provide a monolithic primary structural part for aircraft that solves the above-mentioned drawbacks.

The invention provides a monolithic primary structural part for aircraft, made of carbon fiber composite material and glass fiber composite material, covered completely by at least one glass fiber ply on its external face over multiple carbon fiber plies.

The invention also provides a process for manufacturing said monolithic primary structural part for aircraft, made of carbon fiber composite material and glass fiber composite material of the invention, which comprises calculating the number of glass fiber plies through the following steps:
a) a carbon fiber monolithic primary structural part of thickness less than 3 mm (a thin part) is taken as a reference structural part, with a detectability-energy curve according to the Damage Tolerance criteria, and with a detectability threshold horizontal border,
b) determination of the impact energy for the reference structural part as the cut point between the detectability-energy curve and the detectability threshold horizontal border,
c) application of the impact energy of b) to the reference structural part and performance of Compression After Impact test, Tension After Impact Test or Shear After Impact test on the reference structural part,
d) forming several specimens of structural parts as a result of removing different thicknesses of external carbon fiber plies in the reference structural part and replacing them with glass fiber plies, so that the weight of the removed carbon fiber plies is greater than the weight of the introduced glass fiber plies, and the delaminated area is equivalent to the detectability threshold,
e) performance of Compression After Impact test if Compression After Impact Test was performed in step c), Tension After Impact Test if Tension After Impact Test was performed in step c) or Shear After Impact Test if Shear After Impact Test was performed in step c), on the specimens obtained in d), and
f) obtention of the preferred specimen with a Compression After Impact equal or bigger than the Compression After Impact of the reference structural part if Compression After Impact Test was performed in steps c) and e) with a Tension After Impact equal or bigger than the Tension After Impact of the reference structural part if Tension After Impact Test was performed in steps c) and e) or with a Shear After Impact equal or bigger than the Shear After Impact of the reference structural part if Shear After Impact Test was performed in steps c) and e), the preferred specimen containing a number of glass fiber plies replacing a number of carbon fiber plies.

The invention also provides a process for manufacturing said monolithic primary structural part for aircraft, made of carbon fiber composite material and glass fiber composite material of the invention, which comprises calculating the number of glass fiber plies through the following steps:
a) a carbon fiber monolithic primary structural part of thickness greater than 3mm (a thick part) is taken as a reference structural part, with a detectability-energy curve according to the Damage Tolerance criteria, and with a realistic energy vertical border,
b) determination of the impact energy for the reference structural part as the cut point between the detectability-energy curve and the realistic energy vertical border,
c) application of the impact energy of b) to the reference structural part and performance of Compression After Impact test, Tension After Impact Test or Shear After Impact test on the reference structural part,
d) forming several specimens of structural parts as a result of removing different thicknesses of external carbon fiber plies in the reference structural part and replacing them with glass fiber plies, so that the weight of the removed carbon fiber plies is greater than the weight of the introduced glass fiber plies,
e) performance of Compression After Impact test if Compression After Impact Test was performed in step c), Tension After Impact Test if Tension After Impact Test was performed in step c) or Shear After Impact Test if Shear After Impact Test was performed in step c), on the specimens obtained in d), and
f) obtention of the preferred specimen with a Compression After Impact equal or bigger than the Compression After Impact of the reference structural part if Compression After Impact Test was performed in steps c) and e), with a Tension After Impact equal or bigger than the Tension After Impact of the reference structural part if Tension After Impact Test was performed in steps c) and e) or with a Shear After Impact equal or bigger than the Shear After Impact of the reference structural part if Shear After Impact Test was performed in steps c) and e), the preferred specimen containing a number of glass fiber plies replacing a number of carbon fiber plies.

The invention provides the following advantages:
- Increase Damage Tolerance allowable for the Damage Tolerance criteria.
- Weight saving associated with the sizing optimization of those structural parts sized by the Damage Tolerance criteria.
- Significant cost saving as a consequence of the already mentioned weight saving.

It is important to take into account that the solution of the invention provides an unexpected effect of weight saving, as glass fibers are heavier than carbon fibers, and a lighter part is obtained by adding glass fibers according to the invention.

### Brief description of the drawings

For a more complete understanding of the present invention, it will be described below in greater detail, making reference to the attached drawings, in which:
Figure 1 is a graph that summarizes the Damage Tolerance criteria, including the corresponding thresholds.
Figure 2 is a graph showing the Damage Tolerance for a thin part with no glass fiber plies.
Figure 3 is a graph showing the Damage Tolerance for a thin part with glass fiber plies.
Figure 4 is a graph graph showing the Damage Tolerance for a thick part with glass fiber plies.

### Detailed description of the invention

For the purpose of this document, it will be considered that a "thin part" is a part with thickness less than 3 mm, and that a "thick part" is a part with thickness greater than 3 mm.

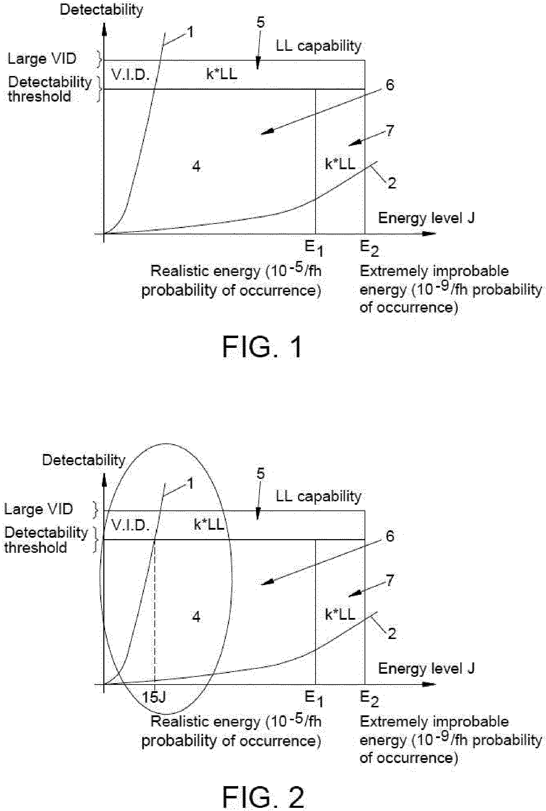

Figure 1 illustrates the fundamentals of the Damage Tolerance criteria. Damage Tolerance criteria is widely used in the process for sizing the structural parts in aircraft.

As it can be seen in figure 1, "energy level" and "detectability" constitute two key variables for establishing when a structural part must sustain Ultimate Load (UL) or K*Limit Load (LL).Talking about "energy levels", some typical recommended impact threats and associated energy thresholds are defined for each structural elementor component.Talking about "detectability", some inspection types are summarized as follows:

SPECIAL DETAILED INSPECTION (SDI): An intensive examination of a specific item, installation, or assembly to detect damage, failure or irregularity. The examination is likely to make extensive use of specialized Inspection Techniques and/or equipment. Intricate cleaning and substantial access or disassembly procedure may be required. When such inspections are required, detailed NDT procedures are described in the Non Destructive Testing Manual (NTM).

DETAILED VISUAL INSPECTION (DET): Close-proximity, intense visual inspection of relatively localized areas of internal and/or external structure. Appropriate access to gain proximity is required. Available lighting is normally supplemented with a direct source of good lighting at an intensity deemed appropriate. Inspection aids and techniques may be more sophisticated (e.g. lenses, grazing light on a clean element) and surface cleaning may also be necessary.

GENERAL VISUAL INSPECTION (GVI): Careful visual examination of relatively large areas of internal and/or external structure. This level of inspection is made within touching distance unless otherwise specified. Appropriate access to gain proximity (e.g. removal of fairings and access doors, use of ladders or work stands) is required. Inspection aids (e.g. mirrors) and surface cleaning may also be necessary. This level of inspection is made under normally available lighting condition such as daylight, hangar lighting, flash lighting or droplight. WALK-AROUND (WA): Long distance visual inspection conducted from ground to detect large area of indentation or fibre breakage, i.e. readily detectable damage.

Based on these inspection types, for each structural element or component, different detectability thresholds are defined.

The following areas are defined in Figures 1 to 4:
4: Static requirements - UL must be sustained.
5: Detectable damage due to impacts up to extremely improbable energy levels.
6: Undetectable damage due to impacts up to realistic energy levels.
7: Undetectable damage due to impacts up to extremely improbable energy levels - Damage tolerance requirements: k*LL must be sustained.

In figures 1 to 4, V.I.D. stands for Visual Inspection Detection.

Coming back to Figure 1, the fundamentals of the Damage Tolerance approach is based on the next guidelines:
- For a given structural part with a specific thickness and stacking sequence, the curve "Detectability-Energy" will be determined. In Figure 1, for example, one curve 1 is shown for a thin part and another curve 2 for a thick part.
- The curve 1, 2 will cut the Realistic Energy vertical border curve or the Detectability threshold horizontal border curve.
- Depending on which curve is cut, the Damage Tolerance allowable will correspond to the "Energy criteria" or to the "Detectability criteria". This Damage Tolerance allowable will come from a specific CAI (Compression After Impact) /TAI (Tension After Impact) /SAI (Shear After Impact) test (normally the first one -CAI-) associated with the energy where the curve 1, 2 crosses one or the other border.

In addition to the well-known advantages of including glass fiber plies in the external areas of the different structural parts (for example, avoiding delaminations at back-movement of riveting tool), some additional benefits associated with the sizing processes, dominated by Damage Tolerance criteria, can be reached. These benefits have to do with significant weight and cost savings.

The procedure to determine the number of glass fiber plies to be placed instead of carbon fiber plies will be detailed below.

When a thin part is involved, the detectability criteria is applied, and the number of glass fiber plies that cover the carbon fiber material is determined according to the following empirical process using the Damage Tolerance criteria for sizing structural parts:
a) a carbon fiber monolithic primary structural part of thickness less than 3mm is taken as a reference structural part, with a detectability-energy curve according to the Damage Tolerance criteria, and with a detectability threshold horizontal border,
b) determination of the impact energy for the reference structural part as the cut point between the detectability-energy curve and the detectability threshold horizontal border,
c) application of the impact energy of b) to the reference structural part and performance of Compression After Impact test, Tension After Impact Test or Shear After Impact Test on the reference structural part,
d) forming several specimens of structural parts as a result of removing different thicknesses of external carbon fiber plies in the reference structural part and replacing them with glass fiber plies, so that the weight of the removed carbon fiber plies is greater than the weight of the introduced glass fiber plies, and the delaminated area is equivalent to the detectability threshold,
e) performance of Compression After Impact test if Compression After Impact Test was performed in step c), Tension After Impact Test if Tension After Impact Test was performed in step c) or Shear After Impact Test if Shear After Impact Test was performed in step c), on the specimens obtained in d), and
f) obtention of the preferred specimen with a Compression After Impact equal or bigger than the Compression After Impact of the reference structural part if Compression After Impact Test was performed in steps c) and e), with a Tension After Impact equal or bigger than the Tension After Impact of the reference structural part if Tension After Impact Test was performed in steps c) and e), or with a Shear After Impact equal or bigger than the Shear After Impact of the reference structural part if Shear After Impact Test was performed in steps c) and e), the preferred specimen containing a number of glass fiber plies replacing a number of carbon fiber plies.

When a thick part is involved, the energy criteria is applied, and the number of glass fiber plies that cover the carbon fiber material is determined according to the following empirical process using the Damage Tolerance criteria for sizing structural parts:
a) a carbon fiber monolithic primary structural part of thickness greater than 3mm is taken as a reference structural part, with a detectability-energy curve according to the Damage Tolerance criteria, and with a realistic energy vertical border,
b) determination of the impact energy for the reference structural part as the cut point between the detectability-energy curve and the realistic energy vertical border,
c) application of the impact energy of b) to the reference structural part and performance of Compression After Impact test, Tension After Impact Test or Shear After Impact test on the reference structural part,
d) forming several specimens of structural parts as a result of removing different thicknesses of external carbon fiber plies in the reference structural part and replacing them with glass fiber plies, so that the weight of the removed carbon fiber plies is greater than the weight of the introduced glass fiber plies,
e) performance of Compression After Impact test if Compression After Impact Test was performed in step c), Tension After Impact Test if Tension After Impact Test was performed in step c) or Shear After Impact Test if Shear After Impact Test was performed in step c),on the specimens obtained in d), and
f) obtention of the preferred specimen with a Compression After Impact equal or bigger than the Compression After Impact of the reference structural part if Compression After Impact Test was performed in steps c) and e), with a Tension After Impact equal or bigger than the Tension After Impact of the reference structural part if Tension After Impact Test was performed in steps c) and e) or with a Shear After Impact equal or bigger than the Shear After Impact of the reference structural part if Shear After Impact Test was performed in steps c) and e), the preferred specimen containing a number of glass fiber plies replacing a number of carbon fiber plies.

The invention will be better illustrated by means of several examples. The following information will be considered in the examples:
- Consider typical area sized by Damage Tolerance criteria.
- Material: Carbon Fiber Prepreg; Ply Thickness 0.25mm.
- Glass fiber; Ply thickness 0.25mm.
- Assessments are included here for thin and thick parts.

### Example 1 (thin part).

A carbon fiber monolithic primary structural part of a thickness of 2,5 mm (10 plies of 0,25 mm) is taken as a reference structural part, with a detectability-energy curve according to the Damage Tolerance criteria, and with a detectability threshold horizontal border. GVI (General Visual Inspection) is taken as inspection procedure. The cut point between the detectability-energy curve and the detectability threshold horizontal border determines an impact energy of 15 J for the reference structural part.

If the external composite ply is changed by glass fiber ply, a new specimen is obtained and it is possible that the GVI procedure can detect the damage at a lower value of energy than before, for example, at 8J.

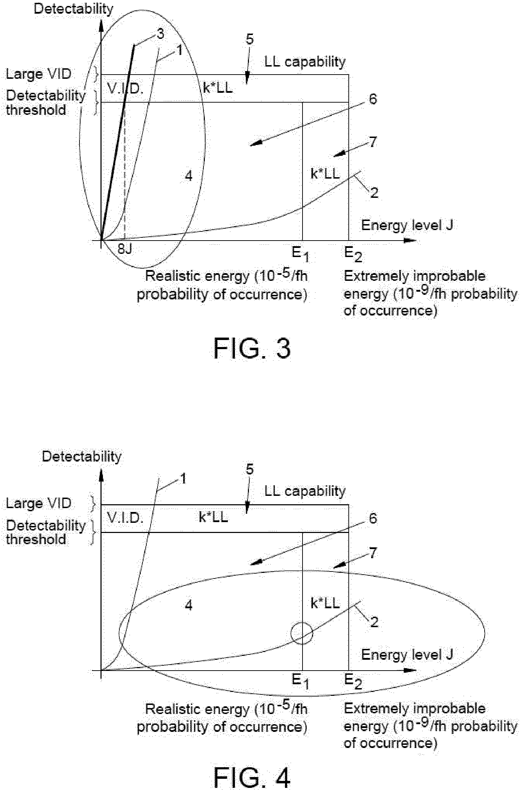

The Compression After Impact test (normally), the Tension After Impact Test or the Shear After Impact Test are performed on the reference structural part and on the specimen with glass fiber in order to get the allowable. If these allowables are better in the second case (lower energy and best impact structural behaviour, already shown in structural tests), than in the first case, weight and cost saving can be reached, in spite of the weight penalty given by the glass fiber in comparison with the carbon fiber one. Figures 2 and 3 illustrate this rationale: figure 2 corresponds to the thin part with no glass fiber ply, and figure 3 corresponds to the thin part with glass fiber ply (curve 3).

The preferred specimen contains a number of glass fiber plies replacing a number of carbon fiber plies.

### Example 2 (thick part).

A carbon fiber monolithic primary structural part of a thickness of 10 mm (40 plies of 0,25 mm) is taken as a reference structural part, with a detectability-energy curve according to the Damage Tolerance criteria, and with a realistic energy vertical border. GVI (General Visual Inspection) is taken as inspection procedure.

If the external composite ply is changed by glass fiber ply, a new specimen is obtained.

The Compression After Impact test (normally), the Tension After Impact Test or the Shear After Impact Test are performed on the reference structural part and on the specimen with glass fiber in order to get the allowable. If these allowables are better in the second case than in the first case, weight and cost saving can be reached, in spite of the weight penalty given by the glass fiber in comparison with the carbon fiber one. Figure 4 illustrates this rationale.

The preferred specimen contains a number of glass fiber plies replacing a number of carbon fiber plies.

Although the present invention has been fully described in connection with preferred embodiments, it is evident that modifications may be introduced within the scope thereof, not considering this as limited by these embodiments, but by the contents of the following claims.

## Claims

1. Monolithic primary structural part for aircraft, made of carbon fiber composite material and glass fiber composite material, **characterized in that** it is covered completely by at least one glass fiber ply on its external face over multiple carbon fiber plies.

2. Process for manufacturing a monolithic primary structural part for aircraft, made of carbon fiber composite material and glass fiber composite material of claim 1, **characterized in that** it comprises calculating the number of glass fiber plies through the following steps:
a) a carbon fiber monolithic primary structural part of thickness less than 3mm is taken as a reference structural part, with a detectability-energy curve according to the Damage Tolerance criteria, and with a detectability threshold horizontal border,
b) determination of the impact energy for the reference structural part as the cut point between the detectability-energy curve and the detectability threshold horizontal border,
c) application of the impact energy of b) to the reference structural part and performance of Compression After Impact test, Tension After Impact Test or Shear After Impact test on the reference structural part,
d) forming several specimens of structural parts as a result of removing different thicknesses of external carbon fiber plies in the reference structural part and replacing them with glass fiber plies, so that the weight of the removed carbon fiber plies is greater than the weight of the introduced glass fiber plies, and the delaminated area is equivalent to the detectability threshold,
e) performance of Compression After Impact test if Compression After Impact Test was performed in step c), Tension After Impact Test if Tension After Impact Test was performed in step c) or Shear After Impact Test if Shear After Impact Test was performed in step c), on the specimens obtained in d), and
f) obtention of the preferred specimen with a Compression After Impact equal or bigger than the Compression After Impact of the reference structural part if Compression After Impact Test was performed in steps c) and e) with a Tension After Impact equal or bigger than the Tension After Impact of the reference structural part if Tension After Impact Test was performed in steps c) and e) or with a Shear After Impact equal or bigger than the Shear After Impact of the reference structural part if Shear After Impact Test was performed in steps c) and e), the preferred specimen containing a number of glass fiber plies replacing a number of carbon fiber plies.

3. Process for manufacturing a monolithic primary structural part for aircraft, made of carbon fiber composite material and glass fiber composite material of claim 1, **characterized in that** it comprises calculating the number of glass fiber plies through the following steps:
a) a carbon fiber monolithic primary structural part of thickness greater than 3mm is taken as a reference structural part, with a detectability-energy curve according to the Damage Tolerance criteria, and with a realistic energy vertical border,
b) determination of the impact energy for the reference structural part as the cut point between the detectability-energy curve and the realistic energy vertical border,
c) application of the impact energy of b) to the reference structural part and performance (normally) of Compression After Impact test, Tension After Impact Test or Shear After Impact test on the reference structural part,
d) forming several specimens of structural parts as a result of removing different thicknesses of external carbon fiber plies in the reference structural part and replacing them with glass fiber plies, so that the weight of the removed carbon fiber plies is greater than the weight of the introduced glass fiber plies,
e) performance of Compression After Impact test if Compression After Impact Test was performed in step c), Tension After Impact Test if Tension After Impact Test was performed in step c) or Shear After Impact Test if Shear After Impact Test was performed in step c), on the specimens obtained in d), and
f) obtention of the preferred specimen with a Compression After Impact equal or bigger than the Compression After Impact of the reference structural part if Compression After Impact Test was performed in steps c) and e), with a Tension After Impact equal or bigger than the Tension After Impact of the reference structural part if Tension After Impact Test was performed in steps c) and e) or with a Shear After Impact equal or bigger than the Shear After Impact of the reference structural part if Shear After Impact Test was performed in steps c) and e), the preferred specimen containing a number of glass fiber plies replacing a number of carbon fiber plies.
